# EUROPEAN PATENT APPLICATION

(11) **EP 4 741 119 A1**
(43) Date of publication of application: **13.05.2026**
(21) Application number: 25187186.9
(22) Date of filing: 03.07.2025
(51) Int. Cl.: B26D 1/02, B26D 1/06, B26D 7/01, B26D 1/00

(54) **ELECTRODE PLATE CUTTING MACHINE FOR MANUFACTURING SECONDARY BATTERY AND APPARATUS FOR MANUFACTURING SECONDARY BATTERY INCLUDING THE SAME**

(30) Priority: 06.11.2024 KR 20240156597
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

The present disclosure provides an electrode plate cutting machine and an apparatus for manufacturing a secondary battery, which may prevent foreign substances or cracks from occurring in a mixture portion while an electrode plate is cut and prevent an active material from being transferred to a separator. The electrode plate cutting machine includes an upper cutter installed above a transport path of an electrode plate transported along the transport path, a lower cutter installed below the transport path to cut the electrode plate, and a stripper installed on a side portion of the lower cutter to support the electrode plate upwardly toward the upper cutter while the electrode plate is cut, wherein the stripper includes a main body which provides a supporting force and a supporter supported by the main body and having a relatively low hardness compared to the upper cutter, the lower cutter, and the main body.

## Description

### FIELD

The present disclosure relates to the cutting of an electrode plate of a secondary battery, and more specifically, to an electrode plate cutting machine for manufacturing a secondary battery and an apparatus for manufacturing a secondary battery including the same.

### BACKGROUND

Secondary batteries are batteries that can be charged and discharged, unlike primary batteries that cannot be recharged. A secondary battery may generally include an electrode assembly including a positive electrode plate, a separator, and a negative electrode plate, a case (or can) for accommodating the electrode assembly, a substrate tab formed by extending an uncoated portion of each electrode plate of the electrode assembly, an external terminal connected to the substrate tab, and the like.

The herein information disclosed in this Background section is for enhancement of understanding of the background of the present disclosure, and therefore, it may contain information that does not constitute a related (or prior) art.

### SUMMARY

The present disclosure is directed to providing an electrode plate cutting machine for manufacturing a secondary battery and an apparatus for manufacturing a secondary battery, which prevent foreign substances or cracks from occurring in a mixture portion while an electrode plate is cut and prevent an active material from being transferred to a separator.

According to an aspect of the present disclosure, there is provided an electrode plate cutting machine for manufacturing a secondary battery, which includes an upper cutter installed above a transport path of an electrode plate transported along the transport path, a lower cutter installed below the transport path to cut the electrode plate, and a stripper installed on a side portion of the lower cutter to support the electrode plate upwardly toward the upper cutter while the electrode plate is cut, wherein the stripper includes a main body which provides a supporting force and a supporter supported by the main body and having a relatively low hardness compared to the upper cutter, the lower cutter, and the main body.

According to another aspect of the present disclosure, there is provided an apparatus for manufacturing a secondary battery, which includes a transport unit configured to transport an electrode plate, which will be cut, along a transport path, a winding unit configured to receive and wind the electrode plate transported by the transport unit, and an electrode plate cutting machine having an upper cutter installed above the transport path of the electrode plate, a lower cutter installed below the transport path of the electrode plate to cut the electrode plate, a main body installed on a side portion of the lower cutter to support the electrode plate upwardly toward the upper cutter while the electrode plate is cut and provides a supporting force, and a supporter supported by the main body and having a relatively low hardness compared to the upper cutter, the lower cutter, and the main body.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The herein and other objects, features and advantages of the present disclosure will become more apparent to those of ordinary skill in the art by describing embodiments thereof in detail with reference to the accompanying drawings, in which:
FIG. 1 is a schematic view illustrating an electrode assembly of a secondary battery which may be manufactured by an apparatus for manufacturing a secondary battery according to embodiments of the present disclosure;
FIG. 2 is a view illustrating an interior of a pouch-type battery to which the electrode assembly of FIG. 1 is applied;
FIG. 3 is a cross-sectional view illustrating a cylindrical battery which may be manufactured by the apparatus for manufacturing a secondary battery according to embodiments of the present disclosure;
FIG. 4 is a perspective view illustrating an exterior of a prismatic battery which may be manufactured by the apparatus for manufacturing a secondary battery according to embodiments of the present disclosure;
FIG. 5 is a cross-sectional view along line A-A in FIG. 4;
FIG. 6 is a view illustrating a basic configuration of the apparatus for manufacturing a secondary battery according to embodiments of the present disclosure;
FIG. 7 is a configuration diagram illustrating a modified example of the apparatus for manufacturing a secondary battery illustrated in FIG. 6;
FIG. 8 is a view illustrating another example of the apparatus for manufacturing a secondary battery according to embodiments of the present disclosure;
FIG. 9 is a view illustrating a modified example of the apparatus for manufacturing a secondary battery illustrated in FIG. 8;
FIG. 10 is a view illustrating another modified example of the apparatus for manufacturing a secondary battery according to embodiments of the present disclosure;
FIG. 11 is a view illustrating still another modified example of the apparatus for manufacturing a secondary battery according to embodiments of the present disclosure;
FIG. 12 is a view illustrating yet another modified example of the apparatus for manufacturing a secondary battery according to embodiments of the present disclosure;
FIG. 13 is a view illustrating yet another modified example of the apparatus for manufacturing a secondary battery according to embodiments of the present disclosure;
FIG. 14 is a view illustrating yet another modified example of the apparatus for manufacturing a secondary battery according to embodiments of the present disclosure;
FIG. 15 is a view illustrating yet another modified example of the apparatus for manufacturing a secondary battery according to embodiments of the present disclosure;
FIG. 16 is a view illustrating yet another modified example of the apparatus for manufacturing a secondary battery according to embodiments of the present disclosure; and
FIG. 17 is a view illustrating yet another modified example of the apparatus for manufacturing a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of"1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

In a secondary battery, the electrode assembly accommodated in a case often includes a stack type and a jelly roll type. The jelly roll type electrode assembly is manufactured by winding continuously supplied electrode plates using a winding device.

The winding device often includes an electrode plate cutting machine. The electrode plate cutting machine is a device for cutting an electrode plate at a designed length interval and includes an upper cutter and a lower cutter. However, conventional electrode plate cutting devices have a problem that cracks occur in a mixture layer of an electrode plate due to the concentration of a load transmitted to the electrode plate at the moment of cutting. That is, at the moment of cutting, an upper cutter, a lower cutter, and a stripper simultaneously press a local area of the electrode plate, thereby causing cracks, and in severe cases, cracked portions are separated, thereby generating foreign substances. There is a need for a stripper having a structure that prevents cracks by dispersing a load applied to a mixture surface while an electrode plate is cut.

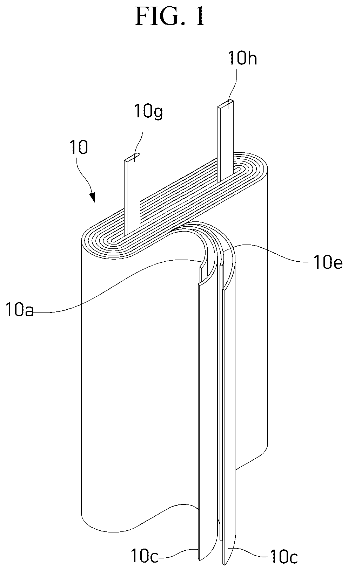

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode tab 10h may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

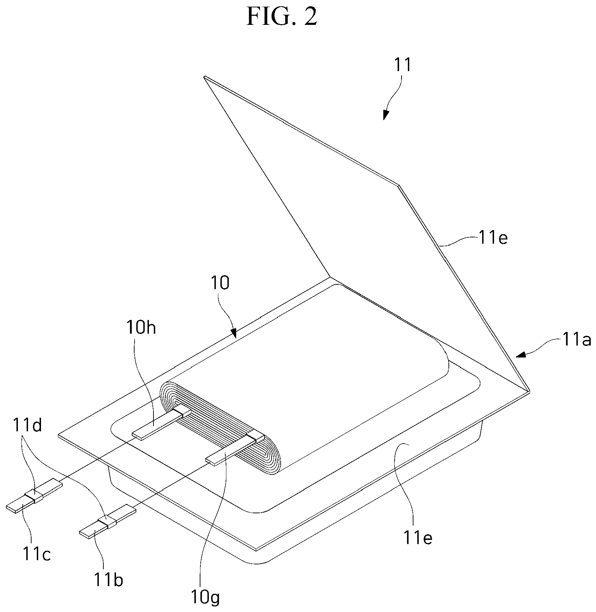

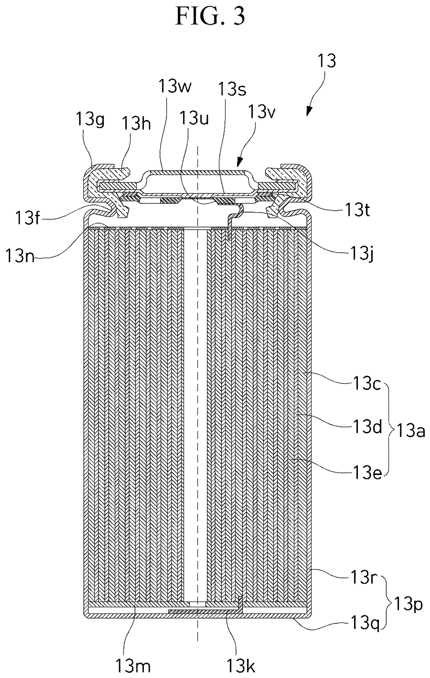

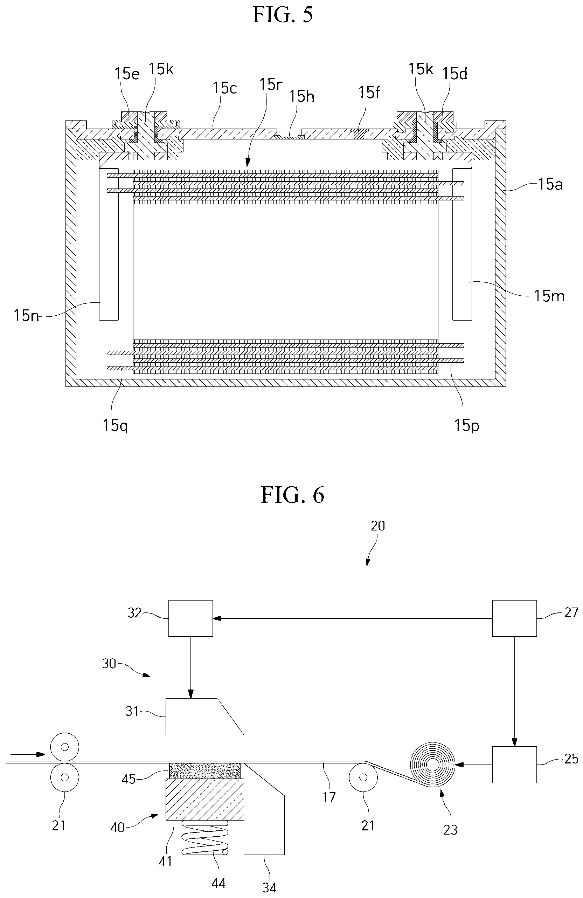

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly of FIG. 1 is applied.

The pouch-type secondary battery 11 includes an electrode assembly 10 and a pouch 11a that accommodates the electrode assembly 10.

The electrode assembly 10 is the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at a portion where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at a portion where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13f. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

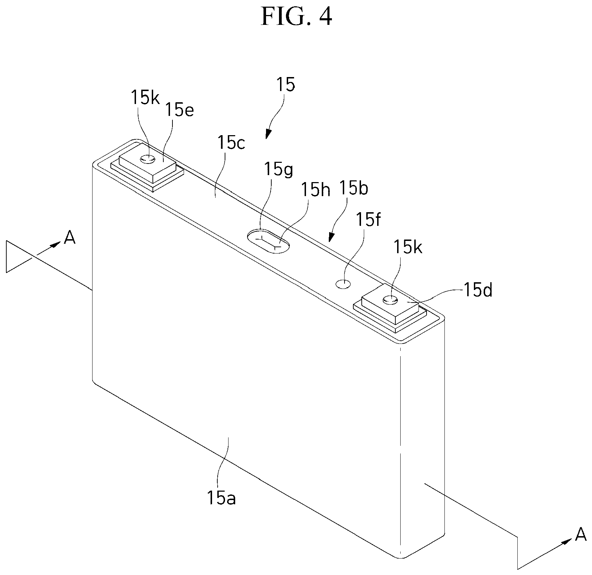

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. **In** addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 15r may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode tab 15q may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

FIG. 6 is a view illustrating a basic configuration of an apparatus 20 for manufacturing a secondary battery according to embodiments of the present disclosure.

As illustrated, the apparatus 20 for manufacturing a secondary battery according to the present embodiment may include a transport unit, a winding unit 23, a winding unit driver 25, a control unit 27, and an electrode plate cutting machine 30.

The transport unit may move an electrode plate 17, which will be cut, along a predetermined transport path. The transport unit may include a plurality of transport rollers 21. Some transport rollers are rollers having a driving force, and the remaining rollers do not have a driving force and may serve to only support the transport rollers tightly. The electrode plate 17 has a predetermined width and is a stack formed of a substrate and a mixture. The electrode plate 17 may be continuously transported along the transport path provided by the transport unit and wound around the winding unit 23. The electrode plate 17 may be a negative electrode plate or a positive electrode plate.

The winding unit 23 may be rotated by power received from the winding unit driver 25 to wind the electrode plate 17. The electrode plate 17 wound around the winding unit 23 may be drawn out by an operator and moved to a subsequent process. The winding unit 23 may include a winding turret winding the electrode plate 17.

The winding unit driver 25 may be controlled by the control unit 27. The winding unit driver 25 may be operated by a control signal of the control unit 27 to rotate or not rotate the winding unit 23.

The control unit 27 may control the on/off and rotational speed of the winding unit driver 25. In addition, the control unit 27 may transmit the control signal to an upper cutter driving unit 32 so that the upper cutter driving unit 32 moves an upper cutter 31 downwardly to cut the electrode plate 17 through cross movement of the upper cutter 31 and a lower cutter 34.

Meanwhile, the electrode plate cutting machine 30 may cut the electrode plate 17 that is transported into a predetermined length unit. Since the jelly roll-type electrode assembly is formed by winding the electrode plate 17, a cutting length of the electrode plate 17 may vary depending on a diameter of the jelly roll being manufactured. The electrode plate 17 cut by the electrode plate cutting machine 30 may be wound around the winding unit 23 and then drawn out to the outside.

The electrode plate cutting machine 30 includes the upper cutter 31, the lower cutter 34, and a stripper 40. The upper cutter 31 may include a cutting blade in which a cutting edge is formed at one side of a lower end portion thereof and may be installed to move upwardly and downwardly above the transport path of the electrode plate 17. The upward and downward movement of the upper cutter 31 may be implemented by the upper cutter driving unit 32. The lower cutter 34 is disposed below the transport path of the electrode plate 17 and may have a blade on an upper end portion thereof. The lower cutter 34 may cut the electrode plate 17 through cross movement with the upper cutter 31.

The stripper 40 includes a main body 41 and a supporter 45. The main body 41 may be elastically supported upwardly by a spring 44. The main body 41 may be formed of a metal such as steel. The main body 41 may transmit a reaction force corresponding to a downward pressure to the electrode plate 17 through the supporter when the upper cutter 31 moves downwardly. In various embodiments, a shape of the main body 41 may be implemented in any of various ways.

The supporter 45 may be a member mounted on an upper portion of the main body 41 and may elastically support the electrode plate 17 upwardly while the electrode plate 17 is cut. The supporter 45 has a relatively low hardness compared to the upper cutter 31, the lower cutter 34, and the main body 41. The upper cutter 31 and the lower cutter 34 may also be formed of a metal such as steel.

The supporter 45 in the present embodiment may be, or may include, a polymer body 45. The polymer body 45 is formed of a polymer material and has a lower hardness than the upper cutter 31, the lower cutter 34, and the main body 41. The polymer body 45 may be thermosetting or thermoplastic.

Since the hardness of the supporter/ polymer body 45 is relatively low compared to those of the upper cutter 31, the lower cutter 34, and the main body 41, the local stress applied to the electrode plate 17 at the moment of cutting the electrode plate 17 can be reduced. The polymer body 45 may be elastically deformed slightly by the pressure applied when cutting the electrode plate. In addition, the stress of the electrode plate can be reduced, thereby preventing cracks or foreign substances from occurring in a mixture portion when cutting the electrode plate.

As illustrated in FIG. 6, the polymer body 45 may have a shape of a plate having a predetermined thickness. The polymer body 45 may bring the electrode plate 17 into close contact with a lower surface of the upper cutter 31 while the electrode plate 17 is cut. In various embodiments, a thickness of the polymer body 45 may be implemented in any of various ways.

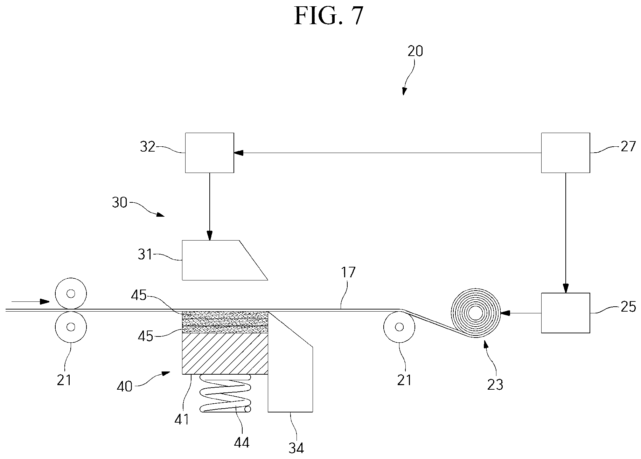

FIG. 7 is a configuration diagram illustrating a modified example of the apparatus 20 for manufacturing a secondary battery illustrated in FIG. 6. As illustrated, the polymer body 45 may be implemented in a multilayered structure. For example, a plurality of polymer bodies manufactured to be relatively thinner than the polymer body 45 illustrated in FIG. 6 are stacked. The number of the polymer bodies may be two or more. In addition, each polymer body 45 may have a constant thickness. Alternatively, the individual thicknesses of the stacked polymer bodies 45 may be different. In addition, the uppermost polymer body 45 among the stacked polymer bodies 45 may be in contact with a lower surface of the electrode plate 17 and may support the electrode plate toward the upper cutter 31 while the electrode plate 17 is cut.

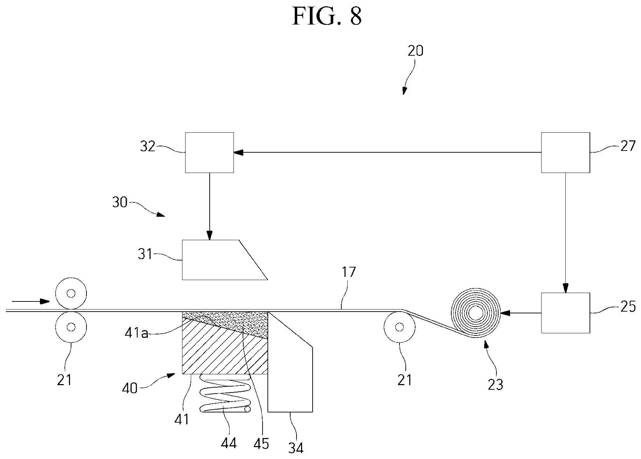

FIG. 8 is a view illustrating another example of the apparatus 20 for manufacturing a secondary battery according to embodiments of the present disclosure.

As illustrated, an inclined surface 41a may be formed on an upper surface of the main body 41. The inclined surface 41a is a portion that is inclined downwardly toward the lower cutter 34. The reason that the inclined surface 41a is applied to the main body 41 is to implement the thickness of the polymer body 45 differently.

The polymer body 45 may be mounted on the inclined surface 41a. A lower surface of the polymer body 45 may be in close contact with the inclined surface 41a, and an upper surface thereof may be parallel to the electrode plate 17. Accordingly, the thickness of the polymer body 45 increases from a side opposite to the lower cutter to the lower cutter. The thickness of the polymer body 45 at a point at which the upper cutter 31, the lower cutter 34, and the stripper 40 meet is the greatest. Since a thick portion of the polymer body 45 has a larger amount of micro-elastic deformation than a thin portion thereof, the stress applied to the electrode plate 17 can be reduced accordingly.

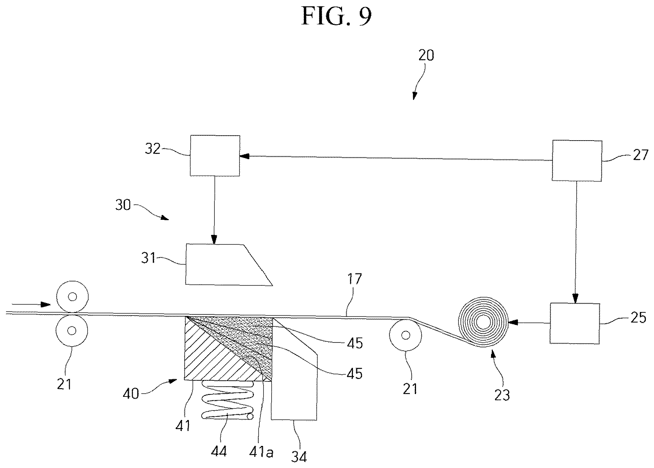

FIG. 9 is a view illustrating a modified example of the apparatus 20 for manufacturing a secondary battery of FIG. 8.

The polymer body of the stripper 40 illustrated in FIG. 9 has a multilayered structure. The lowermost polymer body 45 is in contact with the inclined surface 41a. In addition, an upper surface of the uppermost polymer body 45 may maintain horizontality and may be in contact with the lower surface of the electrode plate while the electrode plate is cut.

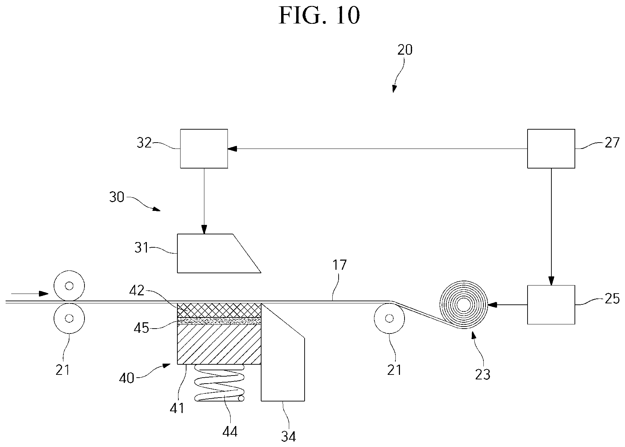

FIG. 10 is a view illustrating still another modified example of the apparatus for manufacturing a secondary battery according to embodiments of the present disclosure.

As illustrated, the polymer body 45 and a cover plate 42 may be sequentially stacked on the main body 41 of the stripper 40. The polymer body 45 may have a predetermined thickness and may be fixedly stacked on the upper surface of the main body 41. In addition, the cover plate 42 is a plate-shaped member fixedly stacked on the polymer body 45 and may receive a pressing force transmitted from the upper cutter during cutting and transmit the pressing force to the polymer body. The cover plate 42 may be a different type of polymer having a higher hardness than the polymer body 45. The cover plate may have a lower hardness than the upper cutter, the lower cutter and the main body.

Since the polymer body 45 is installed between the main body 41 and the cover plate 42, the local pressure applied while the electrode plate 17 is cut is distributed in a planar manner, and a part of the distributed load may be applied to the electrode plate 17.

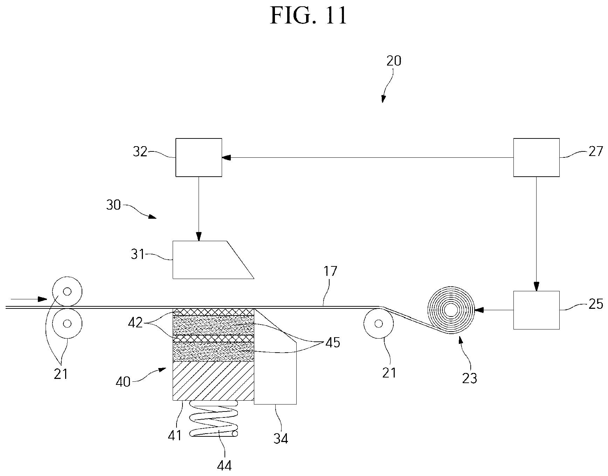

FIG. 11 is a view illustrating yet another modified example of the apparatus for manufacturing a secondary battery according to embodiments of the present disclosure.

As illustrated, the polymer body 45 and the cover plate 42 may be repeatedly stacked on the main body 41. The structures and roles of the polymer body 45 and the cover plate 42 are the same as those described with reference to FIG. 10.

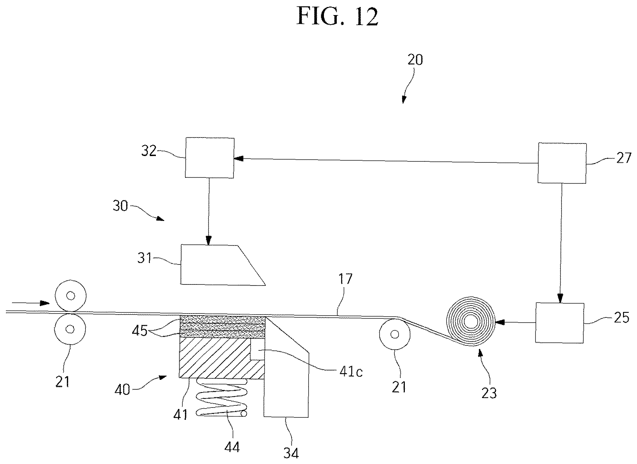

FIG. 12 is a view illustrating yet another modified example of the apparatus for manufacturing a secondary battery according to embodiments of the present disclosure.

As illustrated, a plurality of polymer bodies 45 may be stacked on the main body 41. In addition, a side groove 41a may be formed in one side of the main body 41. The side groove 41a is a groove provided in a side portion of the main body 41 facing the lower cutter and opens upwardly and laterally.

The polymer body 45 may be in a state of being fixed to the upper portion of the main body 41 and may be in a partially floating state above the side groove 41a. Since an empty space is positioned under the polymer body 45 in this way, while the electrode plate 17 is cut, the stress at the local area of the electrode plate 17, that is, at a vertical upper point of the side groove 41a, can be reduced. Whilst Figure 12 illustrates plural plate like polymer bodies 45, embodiments of the invention are not so limited, and there may be fewer or more polymer bodies. The, or each, polymer body 45 may have a plate like shape or any other convenient shape including those illustrated in previous and subsequent embodiments herein.

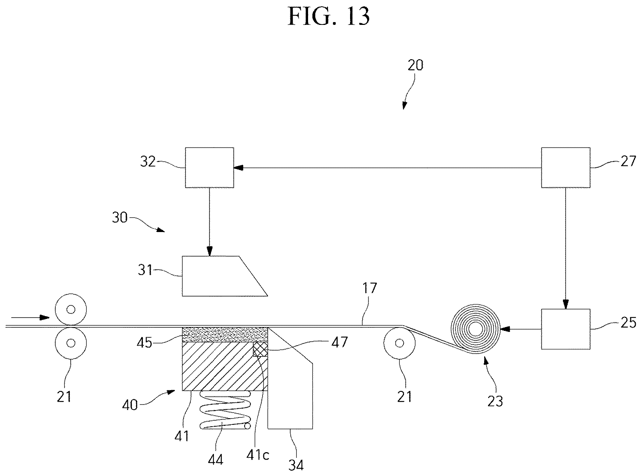

FIG. 13 is a view illustrating yet another modified example of the apparatus for manufacturing a secondary battery according to embodiments of the present disclosure.

As illustrated, a side groove 41c is formed in the side portion of the main body 41 facing the lower cutter, and a support block 45c may be mounted in the side groove. In addition, the polymer body 45 may be fixed to the upper surface of the main body 41 and an upper portion of the support block 45c. The polymer body 45 may be in contact with both the main body 41 and the support block 45c and may transmit the pressing force, which is transmitted from the upper cutter while the electrode plate is cut, downwardly. The support block 45c may be formed of a polymer material and may have a lower hardness than the polymer body 45.

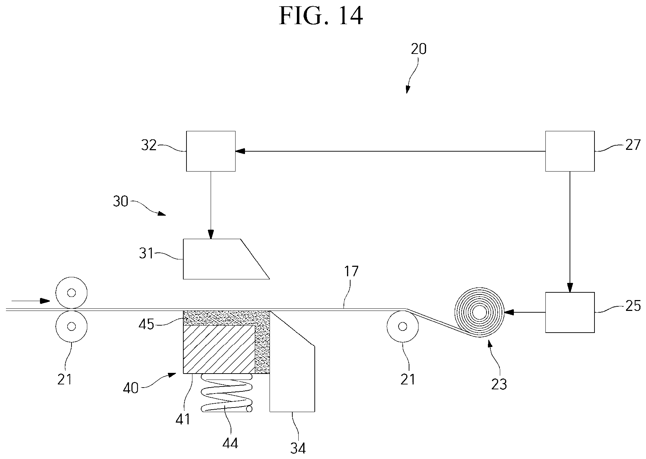

FIG. 14 is a view illustrating yet another modified example of the apparatus 20 for manufacturing a secondary battery according to embodiments of the present disclosure.

The stripper 40 of FIG. 14 may include the main body 41 and the polymer body 45 having a ┐ -shaped cross section. The polymer body 45 may surround the upper and side portions of the main body 41 and may reduce the stress transmitted to the electrode plate 17 while the electrode plate 17 is cut. Since a lower end portion of the polymer body 45 is opened downwardly, the micro-elastic deformation of the polymer body 45 due to the pressing force of the upper cutter can be more easily achieved.

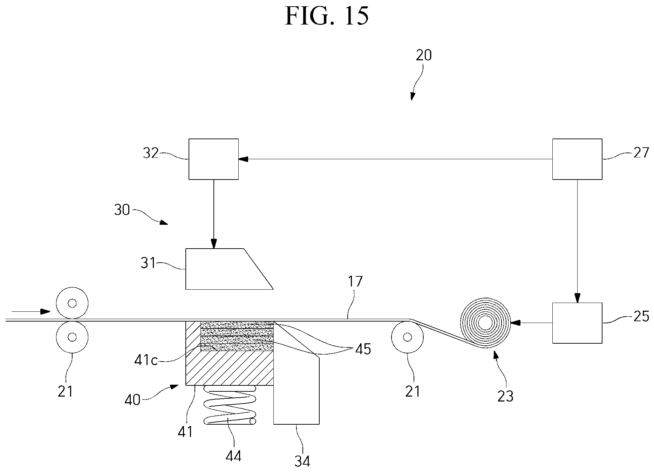

FIG. 15 is a view illustrating yet another modified example of the apparatus for manufacturing a secondary battery according to embodiments of the present disclosure.

As illustrated, multilayered polymer bodies 45 may be mounted in the side groove 41c of the main body 41. The upper surface of the polymer body 45 may have the same height as the upper surface of the main body 41. Accordingly, while the electrode plate 17 is cut, the electrode plate 17 may be in contact with both the main body 41 and the polymer body 45, and the polymer body may receive the pressing force from the upper cutter in the side groove. Again, the number of polymer bodies is not limited to the number shown in FIG. 15.

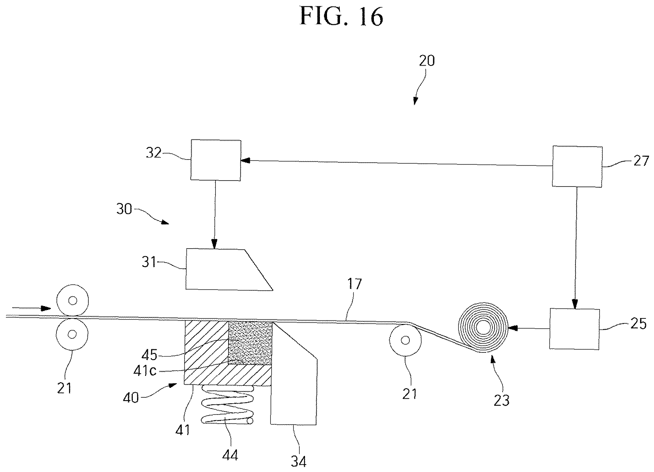

FIG. 16 is a view illustrating yet another modified example of the apparatus for manufacturing a secondary battery according to embodiments of the present disclosure.

As illustrated in FIG. 16, a block-shaped polymer body 45 may be installed in the side groove 41c. Unlike FIG. 15, the polymer body 45 may have an integrated structure and may receive the pressing force transmitted from the upper cutter while the electrode plate is cut.

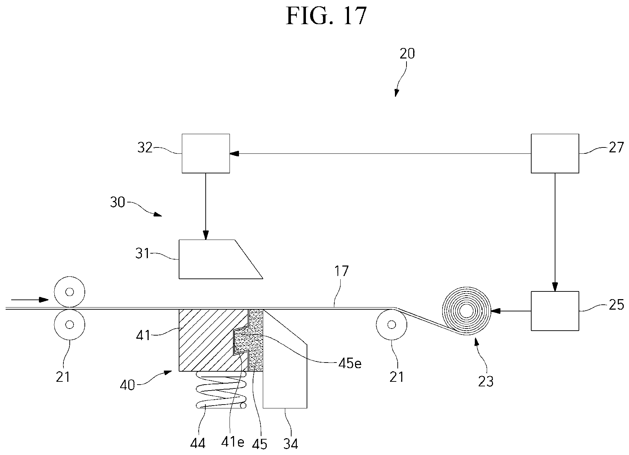

FIG. 17 is a view illustrating yet another modified example of the apparatus for manufacturing a secondary battery according to embodiments of the present disclosure.

As illustrated, a mounting groove 41e may be formed in the side portion of the main body 41, and the polymer body 45 may be supported by the mounting groove 41e. The mounting groove 41e is a groove formed in the side portion of the main body facing the lower cutter and may be inclined upwardly toward the lower cutter.

In addition, an insertion fixing part 45e may be formed integrally with the polymer body 45. The insertion fixing part 45e is a protrusion fitted into the mounting groove 41e. By inserting the insert fixing part 45e into the mounting groove 41e, a coupled state between the polymer body 45 and the main body 41 may be maintained. In addition, the upper surface of the polymer body 45 may have the same height as the upper surface of the main body 41 and simultaneously support the electrode plate 17 and the main body. The pressing force transmitted from the upper cutter while the electrode plate is cut may be transmitted to the polymer body 45.

According to an electrode plate cutting machine for manufacturing a secondary battery and an apparatus for manufacturing a secondary battery of the present disclosure formed as described herein, it is possible to prevent foreign substances or cracks from occurring in a mixture portion while an electrode plate is cut and prevent an active material from being transferred to a separator.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

Embodiments are set out in the following clauses:
Clause 1. An electrode plate cutting machine for manufacturing a secondary battery, comprising: an upper cutter installed above a transport path of an electrode plate transported along the transport path; a lower cutter installed below the transport path to cut the electrode plate; and a stripper installed on a side portion of the lower cutter to support the electrode plate upwardly toward the upper cutter while the electrode plate is cut, wherein the stripper comprises: a main body which provides a supporting force; and a supporter supported by the main body and having a relatively low hardness compared to the upper cutter, the lower cutter, and the main body.
Clause 2. The electrode plate cutting machine of clause 1, wherein the supporter is a polymer body made by molding a polymer, wherein the polymer body has a plate shape and a multilayered structure on an upper portion of the main body, and an uppermost polymer body is in contact with a lower surface of the electrode plate while cutting.
Clause 3. The electrode plate cutting machine of clause 2, wherein an inclined surface inclined downwardly toward the lower cutter is formed on an upper surface of the main body, and the polymer body is fixed to the inclined surface and has a shape in which a thickness increases from a side opposite to the lower cutter to the lower cutter.
Clause 4. The electrode plate cutting machine of clause 2 or 3, wherein the polymer body is fixedly stacked on an upper portion of the main body, and a cover plate which receives a pressing force transmitted from the upper cutter while cutting and transmits the pressing force to the polymer body is further provided on the polymer body.
Clause 5. The electrode plate cutting machine of clause 2, 3 or 4, wherein a side groove which opens upward and laterally is formed in a side portion of the main body facing the lower cutter, a support block is mounted in the side groove, and the polymer body is in contact with both the main body and the support block and transmits a pressing force, which is transmitted from the upper cutter while the electrode plate is cut, downwardly.
Clause 6. The electrode plate cutting machine of any one of clauses 2 to 5, wherein a side groove which opens upwardly and laterally is formed in a side portion of the main body facing the lower cutter, and the polymer body receives a pressing force, which is transmitted from the upper cutter while the electrode plate is cut, while mounted in the side groove.
Clause 7. The electrode plate cutting machine of any one of clauses 2 to 6, wherein a side groove which opens upwardly and laterally is formed in a side portion of the main body facing the lower cutter, and the polymer body has a plate shape, and a part of the polymer body floats above the side groove while fixed to an upper portion of the main body.
Clause 8. The electrode plate cutting machine of any one of clauses 2 to 7, wherein a mounting groove is formed in a side portion of the main body facing the lower cutter, and the polymer body receives a pressing force, which is transmitted from the upper cutter while the electrode plate is cut, while coupled to and supported by the mounting groove of the side portion of the main body.
Clause 9. An apparatus for manufacturing a secondary battery, comprising: a transport unit configured to transport an electrode plate, which will be cut, along a transport path; a winding unit configured to receive and wind the electrode plate transported by the transport unit; and an electrode plate cutting machine having an upper cutter installed above the transport path of the electrode plate, a lower cutter installed below the transport path of the electrode plate to cut the electrode plate, a main body installed on a side portion of the lower cutter to support the electrode plate upwardly toward the upper cutter while the electrode plate is cut and provides a supporting force, and a supporter supported by the main body and having a relatively low hardness compared to the upper cutter, the lower cutter, and the main body.
Clause 10. The apparatus of clause 9, wherein the supporter is a polymer body made by molding a polymer, wherein the polymer body has a plate shape and a multilayered structure on an upper portion of the main body, and an uppermost polymer body is in contact with a lower surface of the electrode plate while cutting.
Clause 11. The apparatus of clause 10, wherein an inclined surface inclined downwardly toward the lower cutter is formed on an upper surface of the main body, and the polymer body is fixed to the inclined surface and has a shape in which a thickness increases from a side opposite to the lower cutter to the lower cutter.
Clause 12. The apparatus of clause 10 or 11, wherein a side groove which opens upwardly and laterally is formed in a side portion of the main body facing the lower cutter, a support block is mounted in the side groove, and the polymer body is in contact with both the main body and the support block and transmits a pressing force, which is transmitted from the upper cutter while the electrode plate is cut, downwardly.
Clause 13. The apparatus of clause 10, 11 or 12, wherein a side groove which opens upwardly and laterally is formed in a side portion of the main body facing the lower cutter, and the polymer body receives a pressing force, which is transmitted from the upper cutter while the electrode plate is cut, while mounted in the side groove.
Clause 14. The apparatus of any one of clauses 10 to 13, wherein a side groove which opens upwardly and laterally is formed in a side portion of the main body facing the lower cutter, and the polymer body has a plate shape, and a part of the polymer body floats above the side groove while fixed to an upper portion of the main body.
Clause 15. The apparatus of any one of clauses 10 to 14, wherein a mounting groove is formed in a side portion of the main body facing the lower cutter, and the polymer body receives a pressing force, which is transmitted from the upper cutter while the electrode plate is cut, while coupled to and supported by the mounting groove of the side portion of the main body.

## Claims

1. An electrode plate cutting machine for manufacturing a secondary battery, comprising:
an upper cutter installed above a transport path of an electrode plate transported along the transport path;
a lower cutter installed below the transport path to cut the electrode plate; and
a stripper installed on a side portion of the lower cutter to support the electrode plate upwardly toward the upper cutter while the electrode plate is cut,
wherein the stripper comprises:
a main body which provides a supporting force; and
a supporter supported by the main body and having a relatively low hardness compared to the upper cutter, the lower cutter, and the main body.

2. The electrode plate cutting machine as claimed in claim 1, wherein the supporter comprises a polymer body.

3. The electrode plate cutting machine of claim 2, wherein the polymer body is a molded polymer body.

4. The electrode plate cutting machine of claim 1, 2 or 3, wherein the supporter has a plate shape.

5. The electrode plate cutting machine of any one of claims 1 to 4, wherein the supporter has a multilayered structure on an upper portion of the main body, and an uppermost layer is configured to be in contact with a lower surface of the electrode plate while cutting.

6. The electrode plate cutting machine as claimed in any one of claims 1 to 5, wherein the main body has an inclined upper surface that is inclined downwardly toward the lower cutter, and
the supporter is fixed to the inclined upper surface and has a shape in which a thickness increases from a side opposite to the lower cutter to the lower cutter.

7. The electrode plate cutting machine as claimed in any one of claims 1 to 6, wherein the supporter is fixedly stacked on an upper portion of the main body, and a cover plate which is configured to receive a pressing force transmitted from the upper cutter while cutting and to transmit the pressing force to the supporter is further provided on the supporter.

8. The electrode plate cutting machine as claimed in any one of claims 1 to 7, wherein a side groove which opens upward and laterally is formed in a side portion of the main body facing the lower cutter.

9. The electrode plate cutting machine as claimed in claim 8, wherein a support block is mounted in the side groove.

10. The electrode plate cutting machine as claimed in claim 9, wherein the supporter is in contact with both the main body and the support block and is configured to transmit a pressing force, which is transmitted from the upper cutter while the electrode plate is cut, downwardly.

11. The electrode plate cutting machine as claimed in any one of claims 1 to 7, wherein a side groove which opens upwardly and laterally is formed in a side portion of the main body facing the lower cutter, and
the supporter is configured to receive a pressing force, which is transmitted from the upper cutter while the electrode plate is cut, while mounted in the side groove.

12. The electrode plate cutting machine as claimed in any one of claims 1 to 7, wherein a side groove which opens upwardly and laterally is formed in a side portion of the main body facing the lower cutter, and
the supporter has a plate shape, and a part of the supporter floats above the side groove while fixed to an upper portion of the main body.

13. The electrode plate cutting machine as claimed in any one of claim 1 to 7, wherein a mounting groove is formed in a side portion of the main body facing the lower cutter, and
the supporter is configured to receive a pressing force, which is transmitted from the upper cutter while the electrode plate is cut, while coupled to and supported by the mounting groove of the side portion of the main body.

14. An apparatus for manufacturing a secondary battery, comprising:
a transport unit configured to transport an electrode plate, which will be cut, along a transport path;
a winding unit configured to receive and wind the electrode plate transported by the transport unit; and
an electrode plate cutting machine as claimed in any one previous claim.
